# FASCICULE DE BREVET EUROPEEN

(11) **EP 2 646 262 B1**
(45) Date de publication et mention de la délivrance du brevet: **07.03.2018**
(21) Numéro de dépôt: 11784711.1
(22) Date de dépôt: 22.11.2011
(51) Int. Cl.: B60C 19/00, B60C 11/03

(54) **DISPOSITIF ANTIBRUIT DESTINE A ETRE RAPPORTE DANS UN SILLON DE LA BANDE DE ROULEMENT D'UN PNEUMATIQUE ET PNEUMATIQUE COMPORTANT UN DISPOSITIF DE CE TYPE**
VORRICHTUNG ZUR GERÄUSCHDÄMPFUNG ZUR ANBRINGUNG IN EINER LAUFSTREIFENNUT UND REIFEN VERSEHEN MIT EINER SOLCHEN VORRICHTUNG
NOISE DAMPING DEVICE FOR BEING ARRANGED IN A GROOVE OF A TIRE TREAD AND TIRE COMPRISING SUCH A DEVICE

(30) Priorité: 02.12.2010 FR 1060018
(43) Date de publication de la demande: 09.10.2013
(73) Titulaire: Compagnie Générale des Etablissements Michelin, 63000 Clermont-Ferrand (FR)
(72) Inventeur: PIALOT, Frédéric, F-63040 CLERMONT-FERRAND Cedex 9 (FR)
(74) Mandataire: Demaure, Pierre-Yves
(86) Numéro de dépôt international: PCT/EP2011/070621
(87) Numéro de publication internationale: WO 2012/072444

(56) Documents cités:
- WO-A1-02/060705
- WO-A1-2010/063749
- JP-A- 4 221 207
- JP-A- 8 150 812
- JP-A- 2003 335 109

## Description

L'invention concerne le domaine de la fabrication des pneumatiques, comportant des parois flexibles disposées dans un sillon de sculpture de pneumatique.

Les sillons de la sculpture ont pour objet de drainer et d'évacuer l'eau lorsque le pneumatique circule sur un sol mouillé ou détrempé. Ces sillons sont à l'origine d'une partie des phénomènes de bruit de roulage, en ce qu'ils constituent des zones d'accumulation d'air sous pression générant des ondes sonores. Les sillons sont disposés dans le sens circonférentiel et dans le sens axial, et leur disposition, leurs dimensions ainsi que leur nombre, font l'objet d'études détaillées de la part des concepteurs de sculptures de pneumatiques.

Dans le but de réduire le niveau de bruit de roulage des pneumatiques, tout en préservant les qualités de drainage de l'eau, il est connu de l'état de la technique de disposer des parois flexibles de faible épaisseur, dans une direction transversale à la direction des sillons. Ces parois mobiles, connues aussi sous l'appellation de flaps, présentent la particularité, à l'image d'une porte, de s'étendre transversalement depuis une des parois du sillon et de rester en position fermée lorsque le pneumatique roule sur sol sec afin de bloquer la diffusion des ondes sonores, et de pouvoir s'ouvrir lorsque le pneumatique roule sur sol mouillé pour permettre l'évacuation de l'eau pénétrant dans le sillon de drainage.

Les publications FR 2 715 891, GB 2 450 723, WO 2010/063749 ou encore EP 908 330 décrivent des formes d'exécution différentes de ces dispositifs antibruit. Le document JP2003335109 divulgue un dispostif antibruit selon le préambule de la revendication 1 comprenant un anneau adapté pour être monté et démonté dans une rainure circonférentielle.

Les dispositifs antibruit décrits dans ces publications sont liés à l'une des parois du sillon, et cette liaison forme une sorte d'articulation autour de laquelle la paroi mobile du dispositif antibruit, en raison de sa flexibilité, passe successivement de la position ouverte à la position fermée sous l'action de la pression de l'eau ou de l'air.

La porte ou paroi flexible peut elle-même présenter une ou plusieurs découpes radiales. L'épaisseur des parois flexibles, varie entre 0,2 mm et 1 mm. La largeur des découpes peut être ajustée à volonté en fonction de la forme particulière que l'on souhaite donner aux bords latéraux de la porte du dispositif antibruit.

En pratique, les moules destinés au moulage des pneumatiques comportant ces artifices comprennent des entailles sensiblement radiales pratiquées dans les cordons destinés à mouler les sillons de drainage, qui s'étendent transversalement à la direction desdits cordons.

Toutefois, la réalisation de ces entailles, avec le degré de précision requis, s'accompagne d'un grand nombre de difficultés en raison de la maîtrise des contre dépouilles. De plus, lorsque l'on procède au moulage d'un nombre élevé de pneumatiques à l'aide d'un moule comportant lesdites entailles, on observe un encrassement voire une obturation des entailles, préjudiciable à la qualité du pneumatique obtenu, qui impose une opération de maintenance lourde et coûteuse.

Le but de l'invention est de proposer une solution simple permettant de s'affranchir des problèmes soulevés ci-dessus.

L'objet de l'invention est un dispositif antibruit destiné à être rapporté dans un sillon de la bande de roulement d'un pneumatique comprenant une semelle élastique s'étendant préférentiellement selon une direction longitudinale donnée. Selon l'invention, ladite semelle comporte sur une de ses faces une ou plusieurs parois flexibles dont les plans sont disposés sensiblement perpendiculairement à la direction longitudinale de la semelle, où les deux extrémités longitudinales de la semelle sont effilées dans le sens de l'épaisseur.

L'invention concerne également un pneumatique comprenant un ou plusieurs sillon de profondeur et de largeur données, dont au moins un sillon comprend au moins un dispositif antibruit tel que proposé dans le paragraphe précédent.

De la sorte, des dispositifs antibruit peuvent être installés par simple rajout dans le sillon d'un pneumatique vulcanisé. L'invention permet ainsi d'éviter les inconvénients liés au moulage cités plus haut, et d'équiper les pneumatiques d'un dispositif antibruit à la demande, sans qu'il soit nécessaire de modifier les moules existants, et très en aval dans les circuits de distribution,.

Avantageusement les parois élastiques ont une épaisseur comprise entre 0,5mm et 2mm.

Selon les usages, le matériau servant à la réalisation dudit dispositif pourra être un élastomère comprenant du caoutchouc ou encore un élastomère thermoplastique.

Il peut également s'avérer intéressant de prévoir que les parois et la semelle soient venues d'un même matériau.

De manière préférentielle, les parois flexibles sont espacées entre elles dans la direction longitudinale de la semelle d'une longueur comprise entre 10mm et 50mm.

Pour améliorer le collage de la semelle en fond de sillon, on effile dans le sens de l'épaisseur les deux extrémités longitudinales de ladite semelle.

Une variante de réalisation pourra consister en ce que les deux extrémités longitudinales soient aboutées, de sorte que ladite semelle forme un anneau élastique continu dans lequel les parois flexibles sont situées radialement à l'extérieur dudit anneau.

On s'arrangera également pour que les parois flexibles augmentées de l'épaisseur de la semelle élastique aient une hauteur inférieure ou égale à la profondeur du sillon, et que la semelle élastique et les parois flexibles aient une largeur inférieure ou égale à la largeur du sillon du pneumatique.

Avantageusement, ladite semelle est collée sur la paroi radialement interne du sillon.

Lorsque le pneumatique comprend un dispositif antibruit du type correspondant à un anneau, on veillera à ce que la circonférence de la semelle soit inférieure à la circonférence du fond du sillon du pneumatique.

La description qui suit s'appuie sur les figures 1 à 7 dans lesquelles :
- la figure 1 représente la vue schématique partielle d'un pneumatique comportant des parois flexibles disposées dans les sillons circonférentiels,
- la figure 2 illustre une vue en coupe d'un dispositif antibruit selon l'invention,
- les figures 3 et 4 illustrent des vues en perspectives de dispositifs antibruit selon l'invention,
- la figure 5 illustre un exemple de positionnement d'un dispositif antibruit selon l'invention, par collage dans le fond d'un sillon de pneumatique,
- les figures 6 et 7 illustrent le positionnement de dispositifs antibruit selon une forme de réalisation particulière de l'invention dans un sillon de pneumatique.

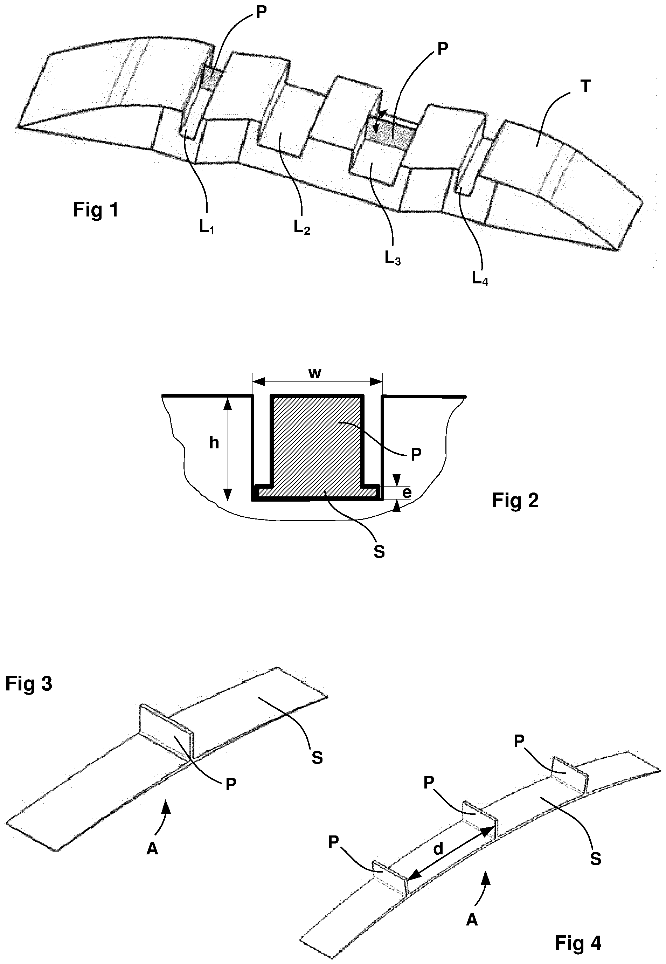

La portion de pneumatique T représentée à la figure 1 comprend une pluralité de sillons L₁, L₂, L₃ et L₄ s'étendant dans la direction circonférentielle de la bande de roulement. A titre d'exemple, deux de ces sillons L₁ et L₃ sont équipés de parois flexibles P. Ces parois sont articulées solidairement à la paroi du fond du sillon et s'inclinent alternativement autour de cette liaison selon les directions indiquées par la flèche à double sens figurées au dessus de la paroi flexible P du sillon L₃.

Les figures 3 et 4 illustrent une première forme de réalisation de dispositifs antibruit selon l'invention, et qui comprend une semelle S comportant une ou plusieurs parois flexibles P dont les plans sont disposés sensiblement perpendiculaires à la direction longitudinale de ladite semelle S.

Les deux extrémités longitudinales de la semelle S sont effilées dans le sens de l'épaisseur. Cet artifice permet d'améliorer la tenue de la semelle lorsque le dispositif antibruit est collé dans le fond d'un sillon L.

La figure 2 représente, dans une vue en coupe, un dispositif antibruit selon l'invention, disposé dans un sillon de profondeur h et de largeur w. On s'arrange alors pour que la largeur de la semelle S et la largeur de la paroi P soient inférieures ou égales à la largeur w du sillon, et pour que la hauteur de la paroi P, augmentée de l'épaisseur e de la semelle soit inférieure ou égale à la profondeur h du sillon.

Le dispositif antibruit peut être réalisé dans un matériau élastomérique à base de caoutchouc ou à base d'un thermoplastique. On choisira de préférence pour la réalisation de la paroi flexible un matériau présentant les meilleurs propriétés de flexion, et en particulier un matériau dont le module élastique autorise une ouverture sous l'action de la pression de l'eau et une fermeture lorsque seule la pression de l'air agit sur ses deux faces aux vitesses de roulement usuelles du véhicule destiné à recevoir le pneumatique équipé du dispositif antibruit ainsi défini. Ce paramètre peut également être réglé en modifiant l'épaisseur de la paroi flexible, laquelle est avantageusement comprise entre 0,5mm et 2mm.

De même, le matériau de la semelle aura les propriétés élastiques lui permettant de suivre les mouvements de la bande de roulement tout en présentant une bonne compatibilité avec les moyens de collage employés pour faire adhérer la face inférieure de la semelle du dispositif antibruit au matériau formant la bande de roulement.

Pour des raisons pratiques de mise en oeuvre, et bien qu'il soit tout à fait possible de réaliser des dispositifs antibruit avec des matériaux composites différents pour la paroi flexible et la semelle, on réalisera ces dispositifs à l'aide d'un même matériau, en ajustant les paramètres dimensionnels de la paroi flexible pour répondre aux fonctionnalités de flexion désirées.

L'espacement entre deux parois flexibles successives est également déterminé par les caractéristiques du véhicule sur lequel on désire monter un pneumatique équipé de dispositifs selon l'invention, et pour lequel on désire en règle générale que plusieurs dispositifs soient présents simultanément dans l'aire de contact. Pour les usages les plus courants cette distance est comprise entre 10mm et 50mm.

Le choix des moyens de collage sera adapté à la nature des matériaux formant la bande de roulement et la semelle du dispositif antibruit. On veillera notamment à ce que la qualité du collage soit compatible avec les efforts centrifuges engendrés par un roulage à grande vitesse.

Le matériau formant la semelle peut être réalisé à l'aide de tout type de matière élastomérique, pour autant que le système de collage soit adapté au collage de la semelle sur le matériau utilisé pour la bande de roulement du pneumatique.

A titre d'exemple pour une bande de roulement réalisée à l'aide d'un élastomère diénique ou d'un thermoplastique élastomère on pourra choisir une semelle réalisée avec un élastomère diénique du même type, ou bien un matériau de type thermoplastique élastomère, polyuréthane, un matériau à base de silicone, ou encore un matériau formé d'un élastomère de type butyl ou EPDM. Dans ces différents cas, on utilisera, selon les couples de matériaux choisis, une colle de type polyuréthane-urée avec un activateur de surface ou une colle poly-urée avec un primaire de surface. Le collage pourra s'effectuer à chaud ou à une température légèrement supérieure à la température ambiante.

On remarquera à ce stade, que lorsque le dispositif antibruit est collé dans le fond du sillon de la bande de roulement d'un pneumatique, il est indifférent que ce sillon soit orienté dans une direction essentiellement circonférentielle ou axiale. Il suffit que sa longueur soit supérieure ou égale à la longueur de la semelle.

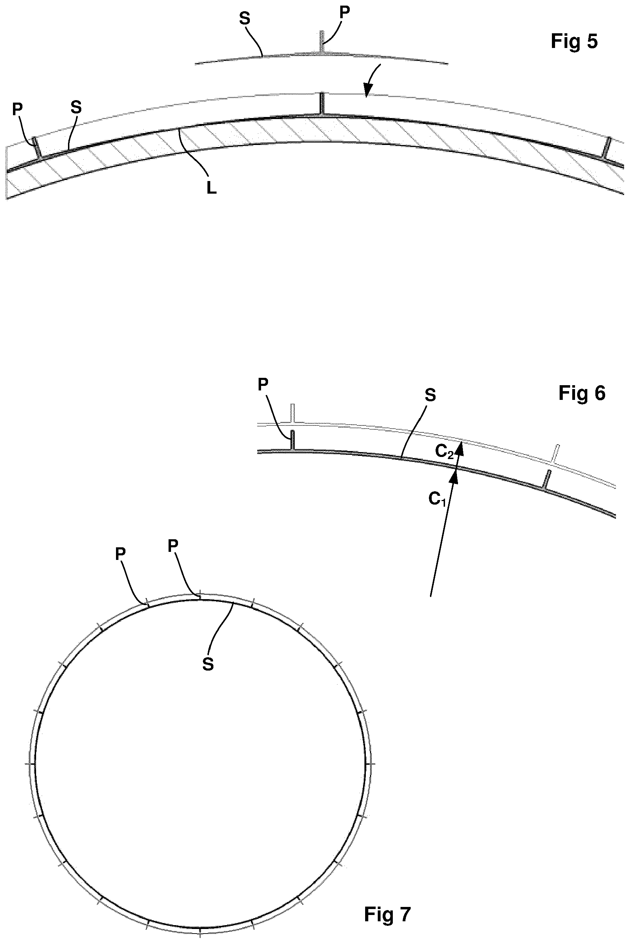

Les figures 6 et 7 illustrent une variante de réalisation qui s'avère particulièrement intéressante lorsque l'on désire équiper des pneumatiques dont la bande de roulement présente des sillons orientés essentiellement dans la direction circonférentielle.

Selon cette forme de réalisation, les deux extrémités longitudinales de la semelle sont jointes pour former un anneau. Les parois flexibles sont placées radialement vers l'extérieur de l'anneau. Il suffit donc de choisir un anneau élastique continu dont la circonférence libre est légèrement inférieure à la circonférence du fond du sillon du pneumatique dans lequel on désire placer ce dispositif antibruit de sorte que la semelle élastique soit en tension lorsque l'on dispose l'anneau dans le fond du sillon de la bande de roulement. Cette tension assure le serrage nécessaire au maintien du dispositif antibruit dans le sillon de la bande de roulement pendant le roulage.

Il n'est alors plus nécessaire, même si cela reste recommandé, de coller la semelle sur le fond du sillon.

## Revendications

1. Dispositif antibruit (A) destiné à être rapporté dans un sillon (L) de la bande de roulement d'un pneumatique (T) comportant une semelle élastique (S) s'étendant préférentiellement selon une direction longitudinale donnée, où ladite semelle comporte sur une de ses faces une ou plusieurs parois flexibles (P) dont les plans sont disposés sensiblement perpendiculairement à la direction longitudinale de la semelle (S), **caractérisé en ce que** les deux extrémités longitudinales de la semelle (S) sont effilées dans le sens de l'épaisseur.

2. Dispositif antibruit (A) selon la revendication 1, dans lequel les parois flexibles ont une épaisseur comprise entre 0,5mm et 2mm.

3. Dispositif antibruit (A) selon l'une des revendications 1 ou 2, dans lequel le matériau servant à la réalisation dudit dispositif est un élastomère comprenant du caoutchouc.

4. Dispositif antibruit (A) selon l'une des revendications 1 ou 2, dans lequel le matériau servant à la réalisation dudit dispositif est un élastomère thermoplastique.

5. Dispositif antibruit (A) selon l'une des revendications 3 ou 4, dans lequel les parois et la semelle sont venues d'un même matériau.

6. Dispositif antibruit (A) selon l'une des revendications 1 à 5, dans lequel les parois flexibles (P) sont espacées entre elles dans la direction longitudinale, d'une longueur comprise entre 10mm et 50mm.

7. Dispositif antibruit (A) selon l'une des revendications 1 à 6, dans lequel les deux extrémités longitudinales de la semelle (S) sont aboutées, de sorte que ladite semelle forme un anneau élastique continu dans lequel les parois flexibles (P) sont situées radialement à l'extérieur dudit anneau.

8. Pneumatique (T) comprenant un ou plusieurs sillons de profondeur (h) et de largeur (w) **caractérisé en ce qu'**au moins un sillon (L) comprend au moins un dispositif antibruit (A) selon l'une des revendications 1 à 7.

9. Pneumatique (T) selon la revendication 8, dans lequel les parois flexibles (P) du dispositif antibruit (A) augmentées de l'épaisseur (e) de la semelle ont une hauteur inférieure ou égale à la profondeur (h) du sillon (L).

10. Pneumatique (T) selon la revendication 8, dans lequel les parois flexibles (P) et la semelle (S) du dispositif antibruit (A) ont une largeur inférieure ou égale à la largeur (w) du sillon (L).

11. Pneumatique (T) selon l'une des revendications 8 à 10, dans lequel ledit dispositif antibruit (A) est collé sur la paroi radialement interne du sillon (L) du pneumatique (T).

12. Pneumatique (T) selon l'une des revendications 8 à 11, dans lequel la circonférence de la semelle (S) est inférieure à la circonférence du fond du sillon (L) du pneumatique (T).

## Patentansprüche

1. Vorrichtung zur Geräuschdämpfung (A), welche dazu bestimmt ist, in einer Rille (L) des Laufstreifens eines Reifens (T) angebracht zu werden, eine elastische Sohle (S) aufweisend, die sich vorzugsweise in einer gegebenen Längsrichtung erstreckt, wobei die Sohle auf einer ihrer Seiten eine oder mehrere flexible Wände (P) aufweist, deren Ebenen im Wesentlichen senkrecht zur Längsrichtung der Sohle (S) angeordnet sind, **dadurch gekennzeichnet, dass** die zwei Längsenden der Sohle (S) in der Dickenrichtung verjüngt sind.

2. Vorrichtung zur Geräuschdämpfung (A) nach Anspruch 1, wobei die flexiblen Wände eine Dicke zwischen 0,5 mm und 2 mm aufweisen.

3. Vorrichtung zur Geräuschdämpfung (A) nach einem der Ansprüche 1 oder 2, wobei das zur Herstellung der Vorrichtung dienende Material ein Elastomer ist, welches Gummi umfasst.

4. Vorrichtung zur Geräuschdämpfung (A) nach einem der Ansprüche 1 oder 2, wobei das zur Herstellung der Vorrichtung dienende Material ein thermoplastisches Elastomer ist.

5. Vorrichtung zur Geräuschdämpfung (A) nach einem der Ansprüche 3 oder 4, wobei die Wände und die Sohle aus ein und demselben Material bestehen.

6. Vorrichtung zur Geräuschdämpfung (A) nach einem der Ansprüche 1 bis 5, wobei die flexiblen Wände (P) in der Längsrichtung um eine Länge voneinander beabstandet sind, die zwischen 10 mm und 50 mm liegt.

7. Vorrichtung zur Geräuschdämpfung (A) nach einem der Ansprüche 1 bis 6, wobei die zwei Längsenden der Sohle (S) aneinandergefügt sind, derart, dass die Sohle einen durchgehenden elastischen Ring bildet, wobei sich die flexiblen Wände (P) radial außerhalb des Ringes befinden.

8. Reifen (T), welcher eine oder mehrere Rillen der Tiefe (h) und der Breite (w) umfasst, **dadurch gekennzeichnet, dass** wenigstens eine Rille (L) wenigstens eine Vorrichtung zur Geräuschdämpfung (A) nach einem der Ansprüche 1 bis 7 umfasst.

9. Reifen (T) nach Anspruch 8, wobei die flexiblen Wände (P) der Vorrichtung zur Geräuschdämpfung (A) zusammen mit der Dicke (e) der Sohle eine Höhe haben, die kleiner oder gleich der Tiefe (h) der Rille (L) ist.

10. Reifen (T) nach Anspruch 8, wobei die flexiblen Wände (P) und die Sohle (S) der Vorrichtung zur Geräuschdämpfung (A) eine Breite haben, die kleiner oder gleich der Breite (w) der Rille (L) ist.

11. Reifen (T) nach einem der Ansprüche 8 bis 10, wobei die Vorrichtung zur Geräuschdämpfung (A) auf die radial innere Wand der Rille (L) des Reifens (T) geklebt ist.

12. Reifen (T) nach einem der Ansprüche 8 bis 11, wobei der Umfang der Sohle (S) kleiner als der Umfang des Bodens der Rille (L) des Reifens (T) ist.

## Claims

1. Noise-reducing device (A) intended to be added to a groove (L) of the tread of a tyre (T) comprising an elastic sole (S) preferably extending in a given longitudinal direction, **in which** the said sole on one of its faces comprises one or several flexible walls (P) the planes of which run substantially perpendicular to the longitudinal direction of the sole (S), **characterized in that** the two longitudinal ends of the sole (S) taper in the thickness direction.

2. Noise-reducing device (A) according to Claim 1, in which the flexible walls have a thickness of between 0.5 mm and 2 mm.

3. Noise-reducing device (A) according to either of Claims 1 and 2, in which the material used to make the said device is a rubber-containing elastomer.

4. Noise-reducing device (A) according to either of Claims 1 and 2, in which the material used to make the said device is a thermoplastic elastomer.

5. Noise-reducing device (A) according to either of Claims 3 and 4, in which the walls and the sole are made from one and the same material.

6. Noise-reducing device (A) according to one of Claims 1 to 5, in which the flexible walls (P) are spaced apart in the longitudinal direction by a length of between 10 mm and 50 mm.

7. Noise-reducing device (A) according to one of Claims 1 to 6, in which the two longitudinal ends of the sole (S) are butted together so that the said sole forms a continuous elastic ring in which the flexible walls (P) are situated radially on the outside of the said ring.

8. Tyre (T) comprising one or several grooves of depth (h) and of width (w), **characterized in that** at least one groove (L) comprises at least one noise-reducing device (A) according to one of Claims 1 to 7.

9. Tyre (T) according to Claim 8, in which the flexible walls (P) of the noise-reducing device (A) increased by the thickness (e) of the sole have a height less than or equal to the depth (h) of the groove (L).

10. Tyre (T) according to Claim 8, in which the flexible walls (P) and the sole (S) of the noise-reducing device (A) have a width less than or equal to the width (w) of the groove (L).

11. Tyre (T) according to one of Claims 8 to 10, in which the said noise-reducing device (A) is bonded to the radially internal wall of the groove (L) of the tyre (T).

12. Tyre (T) according to one of Claims 8 to 11, in which the circumference of the sole (S) is less than the circumference of the bottom of the groove (L) of the tyre (T).
